# EUROPEAN PATENT SPECIFICATION

(11) **EP 1 264 798 B1**
(45) Date of publication and mention of the grant of the patent: **31.08.2016**
(21) Application number: 01955536.6
(22) Date of filing: 26.07.2001
(51) Int. Cl.: C01B 33/107, C01B 33/035, C01B 33/03

(54) **PROCESS FOR PRODUCING DISILICON HEXACHLORIDE**
VERFAHREN ZUR HERSTELLUNG VON DISILICIUMHEXACHLORID
PROCEDE DE PRODUCTION D'HEXACHLORURE DE DISILICIUM

(30) Priority: 02.08.2000 JP 2000234621
(43) Date of publication of application: 11.12.2002
(73) Proprietor: Mitsubishi Materials Corporation, Chiyoda-ku Tokyo (JP)
(72) Inventor: KIRII, Seiichi, Yokkaichi-shi, Mie 510-0841 (JP); NARUKAWA, Mitsutoshi, Yokkaichi-shi, Mie 510-0841 (JP); TAKESUE, Hisayuki, Yokkaichi-shi, Mie 510-0841 (JP)
(74) Representative: Hoffmann Eitle
(86) International application number: PCT/JP2001/006450
(87) International publication number: WO 2002/012122

(56) References cited:
- DE-A1- 2 918 078
- GB-A- 904 009
- JP-A- 10 316 413
- JP-A- 11 253 741
- JP-A- 57 140 309
- US-A- 4 454 104
- DATABASE CA [Online] CHEMICAL ABSTRACTS SERVICE, COLUMBUS, OHIO, US; IJUIN, KAZUO ET AL: "Preparation of dichlorosilane by recovery from polycrystalline silicon manufacture" XP002329192 retrieved from STN Database accession no. 112:80492 & JP 01 226712 A2 (HIGH POLYMER RESEARCH INSTITUTE CO., LTD., JAPAN) 11 September 1989 (1989-09-11)
- PATENT ABSTRACTS OF JAPAN vol. 009, no. 059 (C-270), 15 March 1985 (1985-03-15) & JP 59 195519 A (MITSUI TOATSU KAGAKU KK), 6 November 1984 (1984-11-06)

## Description

### [Field of the invention]

Present invention relates to a process for producing hexachlorodisilane (Si₂Cl₆), which can be recovered efficiently from an exhaust gas discharged from a process for producing polycrystalline silicon having a high purity. Moreover, it is preferable that the present invention relates to a producing process recovering tetrachlorodisilane (Si₂H₂Cl₄) together with the hexachlorodisilane.

### [Background of the invention]

Hexachlorodisilane (Si₂Cl₆) is useful as a raw material of an amorphous silicon thin film, a base glass for optical fibers, and disilane, etc. As the process for producing this hexachlorodisilane, it has been known that the process, in which an alloy powder containing silicon is chlorinated to be a mixed gas of a poly-chlorosilane, and this mixed gas is cooled and condensed and then, further distilled to separate hexachlorodisilane. (Japanese Patent Raid Open No. Syou 59-195519) In addition, it has also been known that the process, in which a ferrosilicon is reacted with chlorine gas using a stirring and mixing horizontal-type reaction tube. (Japanese Patent Raid Open No. Syou 60-145908) However, these producing processes use a rough silicon having a metallic silicon grade, as a raw material, and contaminations from a raw material cannot be avoided, so that it is difficult to obtain the product having a high purity Especially, when titanium and aluminum are mixed, since these chlorides, i.e., TiCl₄ and AlCl₃, have a boiling point near hexachlorodisilane, the distillation refining is usually difficult.

US 4,454,104 relates to a process for working up the residual gases in the form of chlorosilanes, hydrogen and hydrogen chloride, in the deposition of silicon by means of the thermal decomposition of a mixture of gases consisting of chlorosilanes and hydrogen on heated supports.

### [Disclosure of the invention]

Present invention solves the above-mentioned conventional problems in the processes for producing hexachlorodisilane, and provides the process, in which hexachlorodisilane having a high purity can be obtained efficiently. That is, in the present invention, by considering the process for producing polycrystalline silicon, where a raw material gas having a high purity is used, it was found that a polymer, such as hexachlorodisilane having a high purity, in which a component having a higher boiling point than that of silicon tetrachloride is called a polymer, was contained in the exhaust gas with unreacted hydrogen gas, trichlorosilane, and by-product silicon tetrachloride and then, it made that the hexachlorodisilane can be recovered easily from the exhaust gas. Furthermore, since tetrachlorodisilane is also contained so much in this polymer, the present invention also provides the process, in which tetrachlorodisilane is recovered at the time of recovering the hexachlorodisilane.

That is, the present invention provides the process for producing the hexachlorodisilane according to claims 1 to 12.

According to the producing process of the present invention, the hexachlorodisilane can be recovered efficiently from the exhaust gas discharged from the reactor for producing poly crystalline silicon from the chlorosilane and hydrogen. Moreover, according to the producing process of the present invention, tetrachlorodisilane can be recovered together with the hexachlorodisilane. In addition, since the hexachlorodisilane and tetrachlorodisilane of the present invention are recovered from the reaction exhaust gas of polycrystalline silicon used as a semiconductor material, they have a far higher purity than the conventional ones produced from the metallic silicon. Furthermore, in the treatment process of the present invention, the recovery rate of the hexachlorodisilane can be raised by introducing chlorine into the distillation solution to advance chlorination. In addition, in this case, it can be prevented to occur fine particles at the time of distillation by degassing the residual chlorine from the solution, where chlorine is introduced.

### [Brief Description of Drawings]

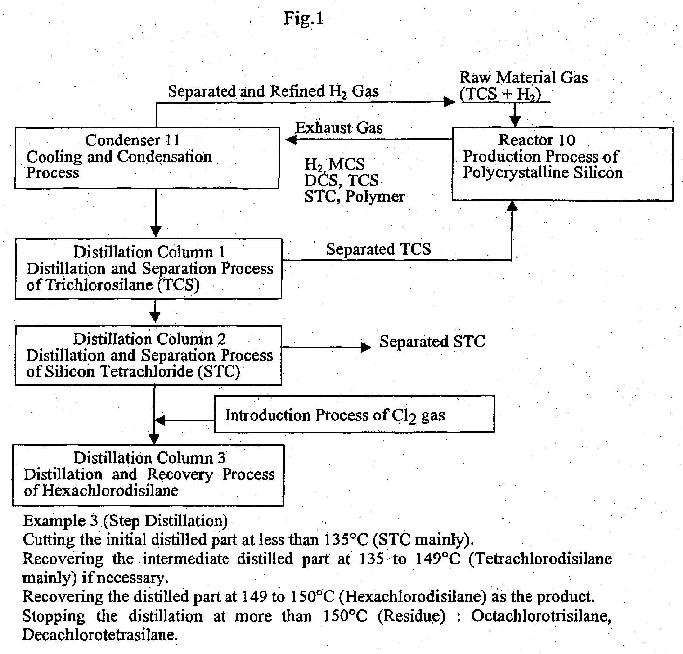

Fig.1 is the process drawing showing one example of the producing process of the present invention.

### [Best Embodiments of the invention]

Hereafter, the present invention is explained concretely based on the embodiment drawing the present invention. Fig.1 is the process drawing showing one example of the producing process of the present invention. In addition, % is weight % unless it is shown especially. Moreover, a distillation temperature etc. shown in the following explanation is defined concretely according to the inside pressure of column or the distillation process.

The producing process of the present invention is the process, in which the hexachlorodisilane can be recovered from the exhaust gas discharged from the vapor phase deposition reaction system of silicon, where polycrystalline silicon is deposited on a heated body by thermal cracking or hydrogen reduction of the chlorosilane gas at high temperature. That is, it is the production process, in which this exhaust gas is cooled to make the condensate, where hydrogen gas is separated, and the resultant condensate is distilled to separate the unreacted chlorosilane, i.e. trichlorosinae (SiHCl₃), etc., and by-product silicon tetrachloride (SiCl₄), and then, further distilled to recover hexachlorodisilane (Si₂Cl₆). In addition, tetrachlorodisilane (Si₂H₂Cl₄) is also contained so much in this exhaust gas with the hexachlorodisilane, so that tetrachlorodisilane can also be recovered at the time of recovering the hexachlorodisilane by the process of the present invention. Moreover, as the chlorosilane being a raw material for the production of the polycrystalline silicon, although trichlorosilane is used mainly, it is available that dichlorosilane (SiH₂Cl₂), silicon tetrachloride, or mixed one of these compounds, is used.

In the example of the producing process shown in Fig. 1, 4 processes are prepared, i.e., the condensation process (Condenser 11), in which the exhaust gas discharged from the reactor 10 is cooled to separate hydrogen gas, the process (Distillation column 1), in which the resultant condensate is distilled to separate the trichlorosilane, the process (Distillation column 2), in which silicon tetrachloride is distilled to be separated, and the process (Distillation column 3), in which the hexachlorodisilane is distilled to be recovered, are prepared. In addition, although the chlorine introduction process is prepared between the distillation separation process of silicon tetrachloride and the distillation recovery process of the hexachlorodisilane, it is available that this process is prepared if necessary.

As the producing process of the polycrystalline silicon having a high purity, which is a semiconductor material, the Siemens method has been known in general. One example of this producing process is the process, in which the mixed gas of trichlorosilane and hydrogen is used as a raw material gas to be supplied to the reaction furnace at high temperature, and silicon crystal made by thermal cracking and hydrogen reduction of the raw material gas is deposited on the surface of the red heated silicon seed-stick (about 800 to 1200°C) inside reactor to grow the polycrystalline silicon rod having thick radius gradually.

In this producing process, silicon is deposited mainly by the hydrogen reduction (SiHCl₃+H₂ → Si+3HCl) and the thermal cracking reaction of trichlorosilane (4SiHCl₃-+ Si+3SiCl₄+2H₂). However, since the thermal cracking reaction is fast, the by-product silicon tetrachloride is made, and silicon tetrachloride gas is contained so much in the exhaust gas discharged from the reactor together with a lot of the unreacted hydrogen gas and the unreacted trichlorosilane gas. Furthermore, monochlorosilane (SiH₃Cl), dichlorosilane (SiH₂Cl2), or a silicon chloride compound polymer, which are by-produced under the high temperature reaction, are also contained.

In the producing process of the present invention, the exhaust gas containing the chlorosilane, silicon tetrachloride, and the unreacted hydrogen, is used as the raw material. At first, this exhaust gas is led into the condensation process (Condenser 11) to be cooled at the temperature of about -60°C, for example, -65°C to -55°C. At this time, hydrogen remained in the gas state is separated, and other gas components are liquefied to make the condensate. The recovered hydrogen gas is refined to return to the silicon reactor, and reused as the part of the raw material gas.

In the above-mentioned condensate, the chlorosilane, such as trichlorosilane, monochlorosilane or dichlorosilane, silicon tetrachloride, and the polymer comprising other silicon-chloride compounds, are contained. Therefore, this condensate is led into the first distillation separation process (Distillation column 1), and the temperature at the top of the column is set to the distillation temperature of trichlorosilane to recover the distilled trichlorosilane. The distillation temperature is set in the range from more than the boiling point of trichlorosilane to less than that of silicon tetrachloride, for example, 33 °C to 55 °C under the pressure of 0 to 0.1 MPaG.

The recovered trichlorosilane is returned to the reactor 10 to reuse as the part of the raw material for producing silicon. In addition, monochlorosilane, in which the boiling point is about -30 °C , and dichlorosilane, in which the boiling point is about 8.2°C, have the lower boiling point than that of trichlorosilane, in which the boiling point is about 33°C, and are distilled before trichlorosilane. Therefore, monochlorosilane and dichlorosilane can be recovered in the state separated from trichlorosilane by recovering previously. Since these monochlorosilane and dichlorosilane have a high purity, they can be used as the raw material of the metallic silicon or the amorphous silicon for electronic materials. Moreover, since the boiling point of silicon tetrachloride, which is about 58°C, is higher than that of these chlorosilanes, the silicon tetrachloride is discharged from the bottom of column in this distillation process.

Next, the liquid discharged from the distillation separation process (Distillation column 1) is led into the next distillation separation process (Distillation column 2). Then, the temperature at the top of the column is set to the distillation temperature of silicon tetrachloride to recover the distilled silicon tetrachloride. The distillation temperature is set in the range from more than the boiling point of silicon tetrachloride to less than that of hexachlorodisilane, for example, 57°C to 80°C under the pressure of 0 to 0.1MPaG. In this distillation process, while silicon tetrachloride is distilled, the polymer containing the elements having high boiling point remains in the liquid. The recovered silicon tetrachloride can be reused as the producing raw material of trichlorosilane.

In the example of the producing process shown in Fig. 1, the three distillation processes are done independently by each distillation column, i.e., the 1st distillation process, where the condensate separated from hydrogen gas is distilled to separate the unreacted chlorosilane, the 2nd distillation process, where the residual liquid of the 1st distillation process is distilled to separate silicon tetrachloride, and the 3rd distillation process, where the residual liquid of the 2nd distillation process is distilled to separate the hexachlorodisilane, are done. However, it is available that the 1st distillation process and the 2nd distillation process are combined to distill the unreacted chlorosilane and silicon tetrachloride continuously, and after that, the residual liquid of this distillation process is distilled to separate the hexachlorodisilane.

The liquid discharged from the distillation process of silicon tetrachloride (Distillation column 2) is led into the distillation recovery process of the hexachlorodisilane (Distillation column 3), and the temperature at the top of the column is set to the distillation temperature of hexachlorodisilane to recover the distilled hexachlorodisilane. The distillation temperature is set in the range from more than the boiling point of hexachlorodisilane to less than the that of the elements having high boiling point, for example, 144°C to 165°C under the pressure of 0 to 0.1 MPaG. At this time, in the initial distilled part having low distillation temperature, since the residual silicon tetrachloride is contained in the liquid, this distilled part is cut. Next, as raising the distillation temperature, since tetrachlorodisilane (Si₂H₂Cl₄), where the boiling point is about 135°C to 140°C, is distilled, the intermediate distilled part is cut or separated to recover if necessary. Furthermore, when the distillation temperature is reached to the boiling point of hexachlorodisilane, where the boiling point is about 144°C, the hexachlorodisilane having a high purity is distilled to be recovered.

For one example, silicon tetrachlorides is contained so much in the initial distilled part at less than 135°C, and tetrachlorodisilane is contained mainly in the intermediate distilled part at 135°C to 149°C. In the distilled part at 149°C to 150°C, which is higher temperatures, the hexachlorodisilane is contained. When the temperature is more than 130°C, since the compound having high boiling point is distilled, the distillation is stopped before distilling said compound. In the residual liquid remained in the column, octachlorotrisilane, and decachlorotetrasilane, are contained. In addition, the distillation recovery process of the hexachlorodisilane in Distillation column 3 is not only the above-mentioned batch distillation but also the continuous distillation available

In the above-mentioned producing process, the chlorine introduction process can be prepared between the distillation separation process or silicon tetrachloride and the distillation recovery process of hexachlorodisilane. In this process, chlorine gas is added to the residual liquid discharged from the distillation separation process of silicon tetrachloride to advance decomposition, chlorination, and dehydrogenation of the polymer component. Then, the yield of the hexachlorodisilane can be raised by leading this liquid into the distillation recovery process of the hexachlorodisilane. It is preferable that the amount of introduced chlorine is about 5% to 10% of the amount of liquid discharged from the distillation separation process of silicon tetrachloride. Moreover, it is also available that the chlorine introduction process is prepared not only between the distillation separation process of silicon tetrachloride and the distillation recovery process of the hexachlorodisilane, but also between the distillation process of trichlorosilane and that of silicon tetrachloride, in the distillation process of silicon tetrachloride, or in the distillation recovery process of the hexachlorodisilane. In any cases, the yield of the hexachlorodisilane can be raised.

As mentioned above, the yield of hexachlorodisilane can be raised by adding chlorine to the residual liquid after distillation to advance chlorination. However, at this time, when chlorine remains in the residual liquid, the residual chlorine may react with the distillation component to make a powder under the distillation. This powder adheres the inside of the distillation system to make a scale to give bad influences, such as the liquid and gas can not flow easily, and the distillation becomes unstable since a display error of a flow meter occurs, etc. Moreover, the purity of hexachlorodisilane is reduced since this powder is mixed with the distilled hexachlorodisilane. Therefore, when introducing chlorine gas into the residual liquid after distillation, it is preferable that the degassing process of the remained chlorine is prepared after said chlorine introducing. As the degassing process of chlorine gas, the processes can be used, where an inert gas, such as nitrogen and argon, is introduced into the residual liquid after introducing chlorine, and vacuum heating is done. It is preferable that the amount of the inert gas to introduce is about 3 times of the chlorine gas introduced previously.

The chlorine introduction and the degassing of the residual chlorine can be done between arbitrary distillation processes, or in the distillation processes, and it is available that these processes are done by in stages. Moreover, it is also available that the degassing process of the residual chlorine is done continuously after introducing the chlorine, or in the next distillation process. That is, after at least any one of the distillation processes of the chlorosilane, silicon tetrachloride, and hexachlorodisilane, chlorine is introduced into the residual liquid to advance chlorination. After that, the residual chlorine is degassed and this residual liquid is led into the next distillation process. As another process, after chlorine is introduced into the residual liquid to advance chlorination, this residual liquid is led into the next distillation process to degas the chlorine.

In the above-mentioned producing process, the distillation process of trichlorosilane (Distillation column 1), the distillation process of silicon tetrachloride (Distillation column 2), and the distillation process of the hexachlorodisilaine (Distillation column 3), are done continuously by each distillation column 1, 2, and 3, in the example of the producing process shown in the figure. However, it is not limited only such process, but also that it is available that the distillation, columns 1 and 2 or 2, and 3, are done in the same distillation column by controlling the distillation temperature, or each distillation process is combined arbitrarily to be done.

Hereafter, the present invention is explained concretely with the following examples.

### [Example 1]

In the reaction system, where the polycrystalline silicon was deposited on the surface of the heated body at about 1000°C in the reactor 10, where the mixed gas of trichlorosilane and hydrogen was sealed, by thermal cracking and hydrogen reduction. In this reaction system, as shown in Fig.1 the exhaust gas (6910Nm³ / hr) discharged from the reactor 10 was introduced into the condenser 11 to be cooled until -55 °C. While the uncondensed hydrogen gas was recovered to be sent to the reactor 10, the condensed water (4.2m³ / hr) was led into the distillation column 1, and the distillation temperature was set to 52°C at 0.1MPaG. Then, the distilled part (3.7T / hr) was recovered. When this distilled part is analyzed by a gas chromatography, the amount of trichlorosilane is 97.1%, wherein the other is dichlorosilane.

Next, the residual liquid of the distillation column 1 was led into the distillation column 2, and the temperature at the top of the column was set to 79°C at 0.1MPaG to recover the distilled part, which is 1.9T / hr. When this distilled part was analyzed by the gas chromatography, the amount of silicon tetrachloride was 99.3%; wherein the other is trichlorosilane.

Then, the residual liquid discharged from the distillation column 2, which is called as a preparation liquid, was led into the distillation column 3 without introducing chlorine gas to be distilled after setting the temperature at the top of the column of 150°C. First, the initial distilled part at the distillation temperature from less than 31°C to 135°C, was separated, and the distilled part at the distillation temperature from 135°C to 149C, which is the intermediate distilled part, was further separated. After that, the distilled part at the distillation temperature from 149°C to 150°, which is the product, was recovered. The distillation component at the distillation temperature of more than 150°C, was cut as the residue. The recovered gas component was analyzed by the gas chromatography, and these results were shown in Table 1 with the recovered amounts. Moreover, as contrasted with this, the component of the preparation liquid was shown in Table 1. As shown in these results, according to the present invention, the hexachlorodisilane was recovered 19% of the amount of the preparation liquid.

### [Example 2]

The distillation was done like Example 1 excepting that the chlorine gas (4.2kg) was introduced into the preparation liquid (77.1kg). This result was shown in Table 1. According to the present process, hexachlorodisilane was recovered 79% to the amount of the preparation liquid.

**Table 1**

| Component | Preparation liquid | Example 1 (Preparation Liquid 59.0kg) | | | | Example 2 (Preparation Liquid 77.1kg + Chlorine 4.3kg) | | | |
|---|---|---|---|---|---|---|---|---|---|
| | | Initial | Intermediate | Product | Residue | Initial | Intermediate | Product | Residue |
| SiCl₄ | 66.4% | 36.0 | - | - | - | 48.4 | - | - | - |
| Si₂H₂Cl₄ | 14.6% | - | 11.5 | - | - | - | 4.0 | - | - |
| Si₂ Cl₆ | 14.2% | - | - | 1.6 | - | - | - | 8.7 | - |
| Others | 4.8% | - | - | - | 10.7 | - | - | - | 19.8 |
| Remarks | | Si₂Cl₆ Recovery Rate 19% | | | | Si₂Cl₆ Recovery Rate 79% | | | |

(Note) Initial is the amount of the cut initial distilled part. Intermediate is the amount of the intermediate distilled part. Product is the amount of the part of the recovered hexachlorodisilane. Unit is kg. Residue is the amount of the part after distillation. Intermediate of Example 1 contains Si₂Cl₆ of 6.7kg. Intermediate of Example 2 contains Si₂Cl₆ of 2.2kg.

### [Example 3]

An undiluted solution of the hexachlorodisilane made by the producing process of the present invention, was led into the distillation column 3 to be refined, in which said undiluted solution contained the polymer discharged from the distillation column 2. The impurity contained in the refined hexachlorodisilane was shown in Table 2. On the other hand, was the reference example, the undiluted solution of hexachlorodisilane made by using metallic silicon as the raw material, was led into distillation column 3 to be refined according to the conventional method. The amount of this impurity was shown in Table 2 as contrasted with Example 3. As shown in these results, the hexachlorodisilane made by the producing process of the present invention has far lower impurity than that of the conventional process, and the product having a high purity can be obtained.

**Table 2**

| | Present Invention Product | Reference Product | | Present Invention Product | Reference-Product |
|---|---|---|---|---|---|
| Na | < 100ppbw | 2000ppbw | Cr | < 10ppbw | 500ppbw |
| Al | < 50ppbwr | 4000ppbw | Fe | <10ppbw | 3000ppbw |
| K | < 10ppbw | 70000ppbw | Ni | < 10ppbw | 2000ppbw |
| Ca | < 10ppbw | 1000ppbw | Cu | < 10ppbw | 800ppbw |
| Ti | < 50ppbw | 600000ppbw | | | |

| | | | | | |
|---|---|---|---|---|---|
| (Note) Reference Product is hexachlorodisilane made by the conventional process using the metallic silicon as the raw material. | | | | | |

### [Example 4]

In the distillation process like Example 1, the preparation liquid was set to 75.5kg, and chlorine gas (4.1kg) was introduced into the residual liquid discharged from the distillation process of silicon tetrachloride to advance chlorination. After that, nitrogen gas was introduced for 197 minutes by the flow rate of 60 L / min, and bubbled to remove chlorine in the liquid. This solution done by the degassing process is led into the distillation column of hexachlorodisilane, and the generating of the powder at the time of the distillation was measured with the particle counter. This result was shown in Table 3. On the other hand, in the distillation process like this example, the preparation liquid was set to 77.1kg and chlorine gas (4.2kg) was introduced into the residual liquid discharged from the distillation process of silicon tetrachloride to advance chlorination. At this time, the bubbling by nitrogen gas was not done and this solution was led into the distillation column of the hexachlorodisilane, and the generating of the powder at the time of the distillation was measured with the particle counter. This result was shown in Table 3 as the reference example.

As shown in Example 2, by introducing chlorine into the distillation solution to advance chlorination, the yield of hexachlorodisilane can be raised remarkably. However, as shown in Table 3 of this example, by doing the degassing process further after introducing chlorine, the generating of the fine particles at the time of distillation can be prevented. In the solution, where the degassing process was not done after introducing the chlorine, a lot of fine particles having less than 5µm were generated.

**Table 3**

| Powder Size µm | With Chlorine Degassing Process | Without Chlorine Degassing Process |
|---|---|---|
| 10∼100 | Less than 1 Particle / cm³ | 2 Particles / cm³ |
| 5~10 | Less than 1 Particle / cm³ | 690 Particles / cm³ |
| 3∼6 | Less than 1 Particle / cm³ | More than 800 Particles / cm³ |
| 2∼3 | Less than 1 Particle / cm³ | More than 800 Particles / cm³ |

### [Effectiveness on industry]

According to the producing process of the present invention, hexachlorodisilane can be recovered easily with high yield from the exhaust gas discharged from the reactor for producing polycrystalline silicon produced from the chlorosilane and hydrogen as the raw materials. Conventionally, it has not been known yet that the process, in which hexachlorodisilane is recovered from said exhaust gas, so that the producing process of the present invention is also useful as the reusing method of the exhaust gas. Moreover, according to the present invention, tetrachlorodisilane can be recovered together with the hexachlorodisilane. Furthermore, the hexachlorodisilane and tetrachlorodisilane recovered by the process of the present invention, are recovered from the reaction exhaust gas of polycrystalline silicon used as the semiconductor material, so that have a far higher purity than the conventional ones produced from metallic silicon. In addition, the recovery rate of the hexachlorodisilane can be raised by introducing chlorine into the distillation solution to advance chlorination, and the generating of the fine particles at the time of distillation can also be prevented by degassing the residual chlorine from the solution, where chlorine is introduced.

## Claims

1. A process for producing hexachlorodisilane, the process comprising the steps of:
(a) discharging an exhaust gas containing: hexachlorodisilane; hydrogen; chlorosilane; and silicon tetrachloride, from a silicon reaction system to precipitate polycrystalline silicon by thermal cracking or hydrogen reduction of a chlorosilane at high temperature.
(b) cooling the exhaust gas to make a condensate; and
(c) distilling the condensate to recover hexachlorodisilane.

2. The process for producing hexachlorodisilane according to claim 1, the process also comprising,
separating hydrogen from the condensate in step (b); and
separating unreacted chlorosilane and by-product silicon tetrachloride in step (c).

3. The process for producing hexachlorodisilane according to claim 2, wherein step (c) comprises,
a 1st distillation process, in which the condensate separated from hydrogen is distilled to separate the unreacted chlorosilane,
a 2nd distillation process, in which the residual liquid of the 1 st distillation process is distilled to separate silicon tetrachloride, and
a 3rd distillation process, in which the residual liquid of the 2nd distillation process is distilled to separate hexachlorodisilane.

4. The process for producing hexachlorodisilane according to claim 2, wherein step (c) comprises,
a 1st distillation process, in which the condensate separated from hydrogen is distilled to separate the unreacted chlorosilane and by-product silicon tetrachloride continuously, and
a 2nd distillation process, in which the residual liquid of the 1 st distillation process is distilled to separate hexachlorodisilane.

5. The process for producing hexachlorodisilane according to any one of claims 1 to 4,
wherein the step of distilling hexachlorodisilane includes cutting an initial distilled part containing residual silicon tetrachloride, and
recovering a distilled part having hexachlorodisilane as a main component.

6. The process for producing hexachlorodisilane according to any one of claims 1 to 4,
wherein the step of distilling hexachlorodisilane includes cutting an initial distilled part containing residual silicon tetrachloride,
recovering an intermediate distilled part having tetrachlorodisilane as a main component, and
recovering a distilled part having hexachlorodisilane as a main component.

7. The process for producing hexachlorodisilane according to claim 3, wherein the steps of distilling a chlorosilane, silicon tetrachloride, and hexachlorodisilane are done continuously in the order by using each distillation column.

8. The process for producing hexachlorodisilane according to claim 3, further comprising the step of,
introducing chlorine between the step of distilling the chlorosilane and the step of distilling silicon tetrachloride, between the step of distilling silicon tetrachloride and the step of distilling the hexachlorodisilane, to the step of distilling silicon tetrachloride, or to the step of distilling the hexachlorodisilane.

9. The process for producing hexachlorodisilane according to claim 8, further comprising the step of,
degassing any remaining chlorine from a residual liquid to which it has been introduced.

10. The process for producing hexachlorodisilane according to claim 9, the process comprising,
introducing inert gas into the residual liquid, and
degassing chlorine by bubbling.

11. The process for producing hexachlorodisilane according to any one of claims 8 to 10, wherein the process comprises the steps of,
introducing chlorine into the residual liquid to advance chlorination after at least one of the distillation steps of the chlorosilane, silicon tetrachloride, or hexachlorodisilane,
degassing the residual chlorine, and
leading this residual liquid to the next distillation step.

12. The process for producing hexachlorodisilane according to any one of claims 8 to 10, wherein the process comprises the steps of,
introducing chlorine into the residual liquid to advance chlorination after at least one of the distillation steps of the chlorosilane, silicon tetrachloride, or hexachlorodisilane,
leading this residual liquid to the next distillation step, and
degassing the chlorine.

## Patentansprüche

1. Verfahren zur Herstellung von Hexachlordisilan, wobei das Verfahren die Schritte umfasst:
(a) Ausstossen eines Abgases, das Hexachlordisilan; Wasserstoff; Chlorsilan und Siliciumtetrachlorid enthält, aus einem Silicium-Reaktionssystem, um polykristallines Silicium durch thermisches Cracken oder Wasserstoffreduktion von Chlorsilan bei hoher Temperatur auszufällen;
(b) Kühlen des Abgases, um ein Kondensat herzustellen; und
(c) Destillieren des Kondensats, um Hexachlordisilan zurückzugewinnen.

2. Verfahren zur Herstellung von Hexachlordisilan gemäss Anspruch 1, wobei das Verfahren auch umfasst:
Trennen des Wasserstoffs von dem Kondensat in Schritt (b); und
Abtrennen von nicht-umgesetztem Chlorsilan und Siliciumtetrachlorid-Nebenprodukt in Schritt (c).

3. Verfahren zur Herstellung von Hexachlordisilan gemäss Anspruch 2, wobei der Schritt (c) umfasst:
ein erstes Destillationsverfahren, in dem das von Wasserstoff getrennte Kondensat destilliert wird, um nicht-umgesetztes Chlorsilan abzutrennen,
ein zweites Destillationsverfahren, in dem die Restflüssigkeit aus dem ersten Destillationsverfahren destilliert wird, um Siliciumtetrachlorid abzutrennen, und
ein drittes Destillationsverfahren, in dem die Restflüssigkeit aus dem zweiten Destillationsverfahren destilliert wird, um Hexachlordisilan abzutrennen.

4. Verfahren zur Herstellung von Hexachlordisilan gemäss Anspruch 2, wobei der Schritt (c) umfasst:
ein erstes Destillationsverfahren, in dem das von Wasserstoff getrennte Kondensat destilliert wird, um nicht-umgesetztes Chlorsilan und Siliciumtetrachlorid-Nebenprodukt kontinuierlich abzutrennen, und
ein zweites Destillationsverfahren, in dem die Restflüssigkeit aus dem ersten Destillationsverfahren destilliert wird, um Hexachlordisilan abzutrennen.

5. Verfahren zur Herstellung von Hexachlordisilan gemäss irgendeinem der Ansprüche 1 bis 4,
wobei der Schritt, in dem Hexachlordisilan destilliert wird, das Abschneiden eines ersten destillierten Teils, der restliches Siliciumtetrachlorid enthält, einschliesst, und
Rückgewinnen eines destillierten Teils, der Hexachlordisilan als Hauptkomponente aufweist.

6. Verfahren zur Herstellung von Hexachlordisilan gemäss irgendeinem der Ansprüche 1 bis 4,
wobei der Schritt, in dem Hexachlordisilan destilliert wird, das Abschneiden eines ersten destillierten Teils, der restliches Siliciumtetrachlorid enthält, Rückgewinnen eines destillierten Zwischenteils, der Tetrachlordisilan als Hauptkomponente aufweist, und
Rückgewinnen eines destillierten Teils, der Hexachlordisilan als Hauptkomponente aufweist, einschliesst.

7. Verfahren zur Herstellung von Hexachlordisilan gemäss Anspruch 3, wobei die Schritte, in denen Chlorsilan, Siliciumtetrachlorid und Hexachlordisilan destilliert werden, in dieser Reihenfolge unter Verwendung jeder Destillationssäule kontinuierlich durchgeführt werden.

8. Verfahren zur Herstellung von Hexachlordisilan gemäss Anspruch 3, das ferner den Schritt umfasst:
Einführen von Chlor zwischen den Schritt, in dem das Chlorsilan destilliert wird, und den Schritt, in dem das Siliciumtetrachlorid destilliert wird, zwischen den Schritt, in dem das Siliciumtetrachlorid destilliert wird, und den Schritt, in dem das Hexachlordisilan destilliert wird, in den Schritt, in dem das Siliciumtetrachlorid destilliert wird, oder in den Schritt, in dem das Hexachlordisilan destilliert wird.

9. Verfahren zur Herstellung von Hexachlordisilan gemäss Anspruch 8, das ferner den Schritt umfasst:,
Entgasen jeglichen verbliebenen Chlors aus der Restflüssigkeit, in das es eingeführt worden war.

10. Verfahren zur Herstellung von Hexachlordisilan gemäss Anspruch 9, wobei das Verfahren umfasst:
Einführen von Inertgas in die Restflüssigkeit, und
Entgasen des Chlors durch Sprudeln.

11. Verfahren zur Herstellung von Hexachlordisilan gemäss irgendeinem der Ansprüche 8 bis 10, wobei das Verfahren die Schritte umfasst:
Einführen von Chlor in die Restflüssigkeit, um die Chlorierung nach zumindest einem der Destillationsschritte von Chlorsilan, Siliciumtetrachlorid oder Hexachlordisilan voranzutreiben;
Entgasen des restlichen Chlors, und
Leiten dieser Restflüssigkeit zum nächsten Destillationsschritt.

12. Verfahren zur Herstellung von Hexachlordisilan gemäss irgendeinem der Ansprüche 8 bis 10, wobei das Verfahren die Schritte umfasst:
Einführen von Chlor in die Restflüssigkeit, um die Chlorierung nach zumindest einem der Destillationsschritte von Chlorsilan, Siliciumtetrachlorid oder Hexachlordisilan voranzutreiben;
Leiten dieser Restflüssigkeit zum nächsten Destillationsschritt, und
Entgasen des Chlors.

## Revendications

1. Procédé pour la production d'hexachlorodisilane, le procédé comprenant les étapes de :
(a) évacuation d'un gaz d'échappement contenant : de l'hexachlorodisilane ; de l'hydrogène ; du chlorosilane et du tétrachlorure de silicone, à partir d'un système réactionnel de silicone pour précipiter du silicone polycristallin par craquage thermique ou réduction hydrogène d'un chlorosilane à haute température ;
(b) refroidissement du gaz d'échappement pour former un condensat ; et
(c) distillation du condensat pour retrouver de l'hexachlorodisilane.

2. Procédé pour la production d'hexachlorodisilane selon la revendication 1, le procédé comprenant en outre,
la séparation de l'hydrogène du condensat de l'étape (b) ; et
la séparation du chlorosilane n'ayant pas réagi et du sous-produit tétrachlorure de silicone de l'étape (c).

3. Procédé pour la production d'hexachlorodisilane selon la revendication 2, dans lequel l'étape (c) comprend,
un premier processus de distillation, dans lequel le condensat séparé de l'hydrogène est distillé pour séparer le chlorosilane n'ayant pas réagi,
un second processus de distillation, dans lequel le liquide résiduel du premier processus de distillation est distillé pour séparer le tétrachlorure de silicone, et
un troisième processus de distillation, dans lequel le liquide résiduel du second processus de distillation est distillé pour séparer l'hexachlorodisilane.

4. Procédé pour la production d'hexachlorodisilane selon la revendication 2, dans lequel l'étape (c) comprend,
un premier processus de distillation, dans lequel le condensat séparé de l'hydrogène est distillé pour séparer en continu le chlorosilane n'ayant pas réagi et le sous-produit de tétrachlorure de silicone, et
un second processus de distillation, dans lequel le liquide résiduel du premier processus de distillation est distillé pour séparer l'hexachlorodisilane.

5. Procédé pour la production d'hexachlorodisilane selon l'une des revendications 1 à 4, dans lequel l'étape de distillation de l'hexachlorodisilane inclut le coupage d'une partie initiale distillée contenant du tétrachlorure de silicone résiduel, et la récupération d'une partie distillée ayant de l'hexachlorodisilane comme composant principal.

6. Procédé pour la production d'hexachlorodisilane selon l'une des revendications 1 à 4, dans lequel l'étape de distillation de l'hexachlorodisilane inclut le coupage d'une partie initiale distillée contenant du tétrachlorure de silicone résiduel, la récupération d'une partie intermédiaire distillée ayant du tétrachlorodisilane comme composant principal, et la récupération d'une partie distillée ayant l'hexachlorodisilane comme composant principal.

7. Procédé pour la production d'hexachlorodisilane selon la revendication 3, dans lequel les étapes de distillation d'un chlorosilane, du tétrachlorure de silicone, et de l'hexachlorodisilane sont réalisées en continu dans l'ordre en utilisant chaque colonne de distillation.

8. Procédé pour la production d'hexachlorodisilane selon la revendication 3, comprenant en outre l'étape d'introduction de chlore entre l'étape de distillation du chlorosilane et l'étape de distillation du tétrachlorure de silicone, entre l'étape de distillation du tétrachlorure de silicone et l'étape de distillation de l'hexachlorodisilane, à l'étape de distillation du tétrachlorure de silicone, ou à l'étape de distillation de l'hexachlorodisilane.

9. Procédé pour la production d'hexachlorodisilane selon la revendication 8, comprenant en outre l'étape de dégazage du chlorure restant dans le liquide résiduel dans lequel il avait été introduit.

10. Procédé pour la production d'hexachlorodisilane selon la revendication 9, le procédé comprenant,
l'introduction de gaz inerte dans le liquide résiduel, et
le dégazage du chlore par bullage.

11. Procédé pour la production d'hexachlorodisilane selon l'une des revendications 8 à 10, dans lequel le procédé comprend les étapes de,
introduction de chlore dans le liquide résiduel pour avancer la chloration après au moins une des étapes de distillation de la chlorosilane, du tétrachlorure de silicone, ou de l'hexachlorodisilane,
dégazage du chlore résiduel,
conduite de ce liquide résiduel jusqu'à l'étape suivante de distillation.

12. Procédé pour la production d'hexachlorodisilane selon l'une des revendications 8 à 10, dans lequel le procédé comprend les étapes de,
introduction de chlore dans le liquide résiduel pour avancer la chloration après au moins une des étapes de distillation de chlorosilane, du tétrachlorure de silicone, ou de l'hexachlorodisilane,
conduite de ce liquide résiduel jusqu'à l'étape suivante de distillation, et dégazage du chlore.
